(19) Europäisches Patentamt
European Patent Office
Office européen des brevets

(11) Veröffentlichungsnummer : **0 060 826**
**B1**

(12) **EUROPÄISCHE PATENTSCHRIFT**

(45) Veröffentlichungstag der Patentschrift : **19.12.84**

(51) Int. Cl.³ : **C 22 B 7/00**, C 22 B 25/06

(21) Anmeldenummer : **82890019.1**

(22) Anmeldetag : **11.02.82**

# (54) Verfahren zur Rückgewinnung von Schwermetallen.

(30) Priorität : **05.03.81 AT 1014/81**

(43) Veröffentlichungstag der Anmeldung : **22.09.82 Patentblatt 82/38**

(45) Bekanntmachung des Hinweises auf die Patenterteilung : **19.12.84 Patentblatt 84/51**

(84) Benannte Vertragsstaaten : **BE CH DE FR IT LI NL**

(56) Entgegenhaltungen :
**FR-A- 709 107**
**FR-A- 2 297 254**
**Die Akte enthält technische Angaben, die nach dem Eingang der Anmeldung eingereicht wurden und die nicht in dieser Patentschrift enthalten sind.**

(73) Patentinhaber : **VOEST-ALPINE Aktiengesellschaft**
**Werksgelände**
**A-4010 Linz (AT)**

(72) Erfinder : **Eichberger, Ernst, Dipl.-Ing.**
**Grüne Zeile 5**
**A-4600 Wels (AT)**
Erfinder : **Lazar, Gerhard, Mag. Dr.**
**Leibnitzstrasse 39**
**A-4020 Linz (AT)**

(74) Vertreter : **Wolfram, Gustav, Dipl.-Ing.**
**Schwindgasse 7 P.O. Box 205**
**A-1041 Wien (AT)**

**EP 0 060 826 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Rückgewinnung von Schwermetallen, wie Nickel, Kobalt, Kupfer, Silber, Gold, Zinn, Zink und Chrom, aus Metalloxid-, -hydroxid- oder -carbonathältigen Filterrückständen, insbesondere aus durch Behandlung von Galvanikabwässern mit Basen erhaltenen Schlämmen, wobei die Rückstände getrocknet und unter Wärmezufuhr in Gegenwart von kohlenstoffhältigen Reduktionsmitteln und gegebenenfalls nach Beigabe von Zuschlagstoffen reduziert werden.

In galvanischen Betrieben fallen bei einzelnen Produktionsstätten große Mengen sortenreinen Schlammes aus Galvanikabwässern an. Dünnschlamm wird üblicherweise durch Neutralisation der sauren Abwässer mit basischen Verbindungen, wie z. B. NaOH, $Ca(OH)_2$, $CaCO_3$, etc., erhalten und durch Filterpresse, Dekanter u. a. weiter zu einem stichfesten Schlamm oder Filterkuchen entwässert. Diese Rückstände werden gegenwärtig hauptsächlich mit hohen Kosten in Mülldeponien gelagert oder vernichtet.

Es sind bereits Metall-Rückgewinnungsverfahren bekannt, bei denen metalloxidhältige Stäube zusammen mit feinteiligen kohlenstoffhältigen Reduktionsmitteln erhitzt und dabei unter Freiwerden von CO und/oder $CO_2$ in Elektro- oder Trommelöfen reduziert werden. Als Nachteile treten dabei stäubungsbedingte Arbeits- und Umweltprobleme auf, wobei auch Verluste an dem rückzugewinnenden Metall unvermeidlich sind.

Es ist weiters bekannt, solche metallhältigen Stäube nach Zusatz von Reduktionsmitteln zu pelletisieren oder zu brikettieren, wobei, wie in der DE-OS 21 34 116, das zu reduzierende Gut als Flachbett durch einen beheizten Drehherd geführt wird. Die Temperatur wird bei diesem Verfahren unterhalb der Schmelztemperatur des rückzugewinnenden Gutes gehalten, so daß ein Sinterprodukt anfällt, das weiterverarbeitet werden muß.

Die Erfindung bezweckt die Vermeidung der geschilderten Nachteile und Schwierigkeiten und stellt sich die Aufgabe, durch eine spezifische Auswahl der Verfahrensparameter ein nicht-stäubendes metallhältiges Vorprodukt bei Schmelztemperaturen zu reduzieren und die Metalle in reiner Form zu gewinnen.

Diese Aufgabe der Erfindung wird dadurch gelöst, daß die metallhältigen Filterrückstände mit einem Wassergehalt von 30 bis 80 % in einem dreiabteiligen Drehrohrtrockner (Triplextrockner) getrocknet werden, wobei ein Produkt mit einer Korngröße von 0,1 bis 5 mm und einer Schüttdichte von 0,4 bis 1,2 kg/l anfällt, dieses Produkt nach Zusatz der kohlenstoffhältigen Reduktionsmittel, wie Koksgrus, Altöl oder Kunststoffabfälle, in einen Tiegelofen in einer Füllhöhe von 0,4 bis 1,5 m eingebracht und auf eine Temperatur oberhalb des Schmelzpunktes des rückzugewinnenden Metalles erhitzt wird, wobei während der bei höherer Temperatur eintretenden Volumensverringerung des zu reduzierenden Gutes die Füllhöhe durch Nachchargieren des Einsatzes annähernd konstant gehalten wird.

Bei Durchführung des erfindungsgemäßen Verfahrens ist es von Bedeutung, ein Vorprodukt, dessen Korngröße in dem angegebenen, bestimmten Bereich liegt, zu verwenden, wodurch einerseits Staubbelästigungen und Verluste vermieden werden, welches Produkt aber andererseits genügend fließfähig ist, um direkt in einen Tiegelofen chargiert und nachchargiert werden zu können. Die gewünschte Korngröße wird ohne weitere Maßnahmen durch Verwendung eines Triplextrockners erzielt, in welchen der Filterkuchen mit dem angegebenen Feuchtigkeitsgehalt eingebracht wird.

Für die Zusammensetzung eines sortenreinen Ni-hältigen Filterrückstandes werden die beiden folgenden illustrativen Analysen angegeben :

| Filter-rückstand Nr. | $H_2O$ [%] | In Trockensubstanz Ni [%] | $SiO_2$ [%] | CaO [%] | FeO [%] | Cu [%] | Cr [%] |
|---|---|---|---|---|---|---|---|
| 1 | 76 | 41 | 9,1 | 2,7 | 2,6 | 0,07 | 0,01 |
| 2 | 72,5 | 17,5 | — | — | — | 0,09 | 0,01 |

Eine typische Siebanalyse des erfindungsgemäß zu verwendenden Vorproduktes ist die folgende :

| | |
|---|---|
| 0,1 bis 0,2 mm | 3,5 % |
| 0,2 bis 0,5 mm | 9 % |
| 0,5 bis 1 mm | 10 % |
| 1 bis 2 mm | 18 % |
| 2 bis 3 mm | 23 % |
| 3 bis 5 mm | 29 % |

Die kohlenstoffhältigen Reduktionsmittel werden dem Vorprodukt zweckmäßig in einer dem stöchiometrischen Verhältnis gemäß den Reaktionsgleichungen

$$MeO + C \longrightarrow Me + CO$$

(Me steht für ein Schwermetall in der Oxidationsstufe + II).

$$MeO + CO \longrightarrow Me + CO_2$$

entsprechenden Menge zugesetzt.

Je nach den Inhaltsstoffen der metallhältigen Filterrückstände kann sich eine Beigabe von Zuschlagstoffen wie Flußmittel, beispielsweise $SiO_2$ oder $CaF_2$ als zweckmäßig erweisen.

Zur Rückgewinnung von Zinn werden als kohlenstoffhältige Reduktionsmittel vorzugsweise mit Zinn beschichtete Kunststoffabfälle, vorzugsweise mit Zinn beschichtete Printplattenabfälle (Leiterplattenabfälle) eingesetzt.

Zwecks verbesserter Energieverwertung werden zum Trocknen der Filterrückstände vorteilhaft die durch Nachverbrennung der im Tiegelofen entstehenden, CO- und $CO_2$-haltigen Abgase erhaltenen heißen Gase verwendet und die aus dem Trockner abgezogenen Abgase entstaubt und gereinigt.

Bei Durchführung des erfindungsgemäßen Verfahrens ist auch die Art des Schmelzofens von Bedeutung. Flachbettöfen eignen sich ebenso wenig wie Drehrohröfen. Es wurde gefunden, daß für eine einwandfreie Reduktion unter Schmelzbedingungen am besten Tiegelöfen in Betracht kommen, bei denen eine bestimmte Badtiefe ein- und beibehalten wird. Die Beheizung der Öfen kann elektrisch — beispielsweise durch Widerstands- oder Induktionsheizung — oder mittels Gas- oder Ölbrenner erfolgen. Die Tiegelwände können aus Siliziumcarbid, Graphit, Mullit, Magnesiumoxid, Zirkonoxid, Spinellen oder $Al_2O_3$ bestehen.

Der Reduktionsvorgang ist schon bei Temperaturen unterhalb des Schmelzpunktes der jeweils rückzugewinnenden Metalle abgeschlossen. Um die zugeführte Wärmeenergie besser zu nützen, wird durch ein- oder mehrmaliges Nachchargieren die Füllhöhe des zu reduzierenden Gutes annähernd konstant gehalten. Bei der Rückgewinnung von Ni setzt die Volumensverringerung des Tiegelofeninhaltes beispielsweise bei etwa 1 050 °C ein.

Das erfindungsgemäße Verfahren ist durch ein Fließschema in der Zeichnung illustriert.

Mit 1 ist eine Neutralisationsanlage bezeichnet, in welcher saure, metallhältige Lösungen mit Basen behandelt werden. Die ausgefällten Metallverbindungen werden in einer Kammerfilterpresse 2 abgepreßt und die erhaltenen metallhältigen Filterrückstände durch die Leitung 3 einem Triplextrockner 4 zugeführt. Das austretende getrocknete Produkt wird einem Mischer 5 zugeführt, in welchem es mit durch die Leitung 6 zugeführten kohlenstoffhältigen Reduktionsmitteln sowie gegebenenfalls mit Zuschlagstoffen, welche durch eine Leitung 7 eingebracht werden können, gründlich vermengt wird. Das Gemenge gelangt aus dem Mischer in einen Tiegelofen 8. Beim Abgießen des schmelzflüssigen Metalles wird Metall von eventuell vorhandener Schlacke abgetrennt. Das Metall wird beispielsweise zu Barren 9 vergossen und die Schlacke 10 verhaldet. Die in dem Tiegelofen entstehenden, CO- und $CO_2$-haltigen Abgase werden durch eine Leitung 11 einer Heißgaserzeugungsanlage 12 zugeleitet, wo sie nachverbrannt werden. Die erzeugten heißen Gase werden dem Trockner 4 als Trocknungsmedium zugeführt und kühlen sich beim Trockenvorgang soweit ab, daß sie den Trockner mit einer Temperatur von etwa 200 bis 300 °C verlassen. Diese abgekühlten Gase werden über die Leitung 13 einer Trockenentstaubungsanlage 14 zugeführt. Der in der Trockenentstaubungsanlage anfallende Staub wird über die Leitung 15 zum Mischer rückgeführt. Das vorgereinigte Gas wird einem Naßwäscher 16 zugeleitet, aus dem das gereinigte Abgas durch den Kamin 17 ins Freie tritt.

Die Erfindung wird durch folgende Beispiele näher erläutert.

### Beispiel 1

0,7 kg getrockneter, sortenreiner Filterrückstand mit einem Gehalt von 41 % Masse Ni wird mit 0,06 kg Koksgrus vermischt und in einen induktionsbeheizten Tiegelofen eingebracht. Nach einem Zeitraum von ca. 10 Minuten hat die Füllung eine Temperatur von etwa 1 490 °C erreicht. Der Tiegelofeninhalt wird abgegossen. Es werden 0,315 kg metallisches Nickel mit einem Reinheitsgrad von 90,5 % und 0,062 kg Schlacke erhalten.

### Beispiel 2

Ein Filterrückstand mit einem Wassergehalt von 64,5 % und einem Gehalt von 10,83 % an Zinn wird getrocknet. 1,125 kg des getrockneten Rückstandes werden mit 0,24 kg zinnbeschichteten Kunststoffabfällen, welche etwa 13 % Sn enthalten, und 0,135 kg Flußspat vermischt und die Mischung wird in einen Tiegelofen gefüllt.

Es werden 0,156 kg Zinn eines Reinheitsgrades von 95 % erhalten, was einer Ausbeute von 97 % d. Th. entspricht.

**Ansprüche**

1. Verfahren zur Rückgewinnung von Schwermetallen, wie Nickel, Kobalt, Kupfer, Silber, Gold, Zinn,

Zink und Chrom, aus Metalloxid-, -hydroxid- oder -carbonathältigen Filterrückständen, insbesondere aus durch Behandlung von Galvanikabwässern mit Basen erhaltenen Schlämmen, wobei die Rückstände getrocknet und unter Wärmezufuhr in Gegenwart von kohlenstoffhältigen Reduktionsmitteln und gegebenenfalls nach Beigabe von Zuschlagstoffen reduziert werden, dadurch gekennzeichnet, daß die metallhältigen Filterrückstände mit einem Wassergehalt von 30 bis 80 % in einem dreiabteiligen Drehrohrtrockner (Triplextrockner) getrocknet werden, wobei ein Produkt mit einer Korngröße von 0,1 bis 5 mm und einer Schüttdichte von 0,4 bis 1,2 kg/l anfällt, dieses Produkt nach Zusatz der kohlenstoffhältigen Reduktionsmittel, wie Koksgrus, Altöl oder Kunststoffabfälle, in einen Tiegelofen in einer Füllhöhe von 0,4 bis 1,5 m eingebracht und auf eine Temperatur oberhalb des Schmelzpunktes des rückzugewinnenden Metalles erhitzt wird, wobei während der bei höherer Temperatur eintretenden Volumensverringerung des zu reduzierenden Gutes die Füllhöhe durch Nachchargieren des Einsatzes annähernd konstant gehalten wird.

2. Verfahren zur Rückgewinnung von Zinn nach Anspruch 1, dadurch gekennzeichnet, daß als kohlenstoffhältige Reduktionsmittel mit Zinn beschichtete Kunststoffabfälle, vorzugsweise mit Zinn beschichtete Printplattenabfälle, eingesetzt werden.

3. Verfahren nach den Ansprüchen 1 und 2, dadurch gekennzeichnet, daß zum Trocknen der Filterrückstände die durch Nachverbrennung der im Tiegelofen entstehenden CO- und $CO_2$-haltigen Abgase erhaltenen heißen Gase verwendet werden und die aus dem Trockner abgezogenen Abgase entstaubt und gereinigt werden.

**Claims**

1. A method for recovering heavy metals, such as nickel, cobalt, copper, silver, gold, tin, zinc and chromium, from filter residues containing metal oxides, metal hydroxides or metal carbonates, in particular from sludges obtained by the treatment of galvanic waste waters with bases, by drying the residues and reducing them during heat supply in the presence of carbon-containing reductants and, if desired, upon the addition of additives, characterised in that the metal-containing filter residues having a water content of from 30 to 80 % are dried in a three-compartment rotary drier (triplex drier) with a product having a grain size of from 0.1 to 5 mm and a packing density of from 0.4 to 1.2 kg/l forming, this product, upon the addition of carbon-containing reductants, such as breeze, used oil or plastic waste, is charged into a crucible furnace in a filling height of from 0.4 to 1.5 m and is heated to a temperature of above the melting point of the metal to be recovered, the filling height being kept approximately constant during the volume reduction of the stock to be reduced occurring at a higher temperature, by recharging material.

2. A method for recovering tin according to claim 1, characterised in that tin-coated plastic wastes, preferably tin-coated printed board wastes, are used as carbon-containing reductants.

3. A method according to claims 1 and 2, characterised in that the hot gases obtained by reburning the CO- and $CO_2$-containing waste gases forming in the crucible furnace are used to dry the filter residues and the gases withdrawn from the drier are dedusted and purified.

**Revendications**

1. Procédé pour récupérer des métaux lourds tels que le nickel, le cobalt, le cuivre, l'argent, l'or, l'étain, le zinc et le chrome à partir de résidus de filtration contenant des oxydes, hydroxydes ou carbonates métalliques, en particulier de boues obtenues en traitant des eaux résiduaires de galvanoplastie par des bases, dans lequel les résidus sont séchés et réduits avec apport de chaleur, en présence d'agents réducteurs contenant du carbone et, le cas échéant, après mélange d'additifs, ce procédé se caractérisant en ce que les résidus de filtration contenant des métaux, à une teneur en humidité de 30 à 80 %, sont séchés dans un séchoir tubulaire rotatif à trois compartiments (séchoir Triplex), ce qui donne un produit à une dimension de grain de 0,1 à 5 mm et une densité apparente de 0,4 à 1,2 kg/l qu'on introduit après addition des agents réducteurs contenant du carbone, tels que du poussier de coke, de l'huile usagée ou des déchets de matière plastique, dans un four à creuset à une hauteur de remplissage de 0,4 à 1,5 m et qu'on chauffe à une température supérieure au point de fusion du métal à récupérer en maintenant à peu près constante la hauteur de remplissage de la matière à réduire par chargement de compléments du mélange de départ compensant la diminution de volume de la matière à réduire qui se produit aux températures élevées.

2. Procédé pour récupérer de l'étain selon la revendication 1, caractérisé en ce que l'on utilise en tant qu'agent réducteur contenant du carbone des déchets de matière plastique revêtus d'étain, de préférence des déchets de circuits imprimés revêtus d'étain.

3. Procédé selon les revendications 1 et 2, caractérisé en ce que, pour sécher les résidus de filtration, on utilise les gaz chauds obtenus par combustion des gaz résiduaires contenant CO et $CO_2$ formés dans le four à creuset et on soumet les gaz résiduaires évacués du séchoir à dépoussiérage et épuration.

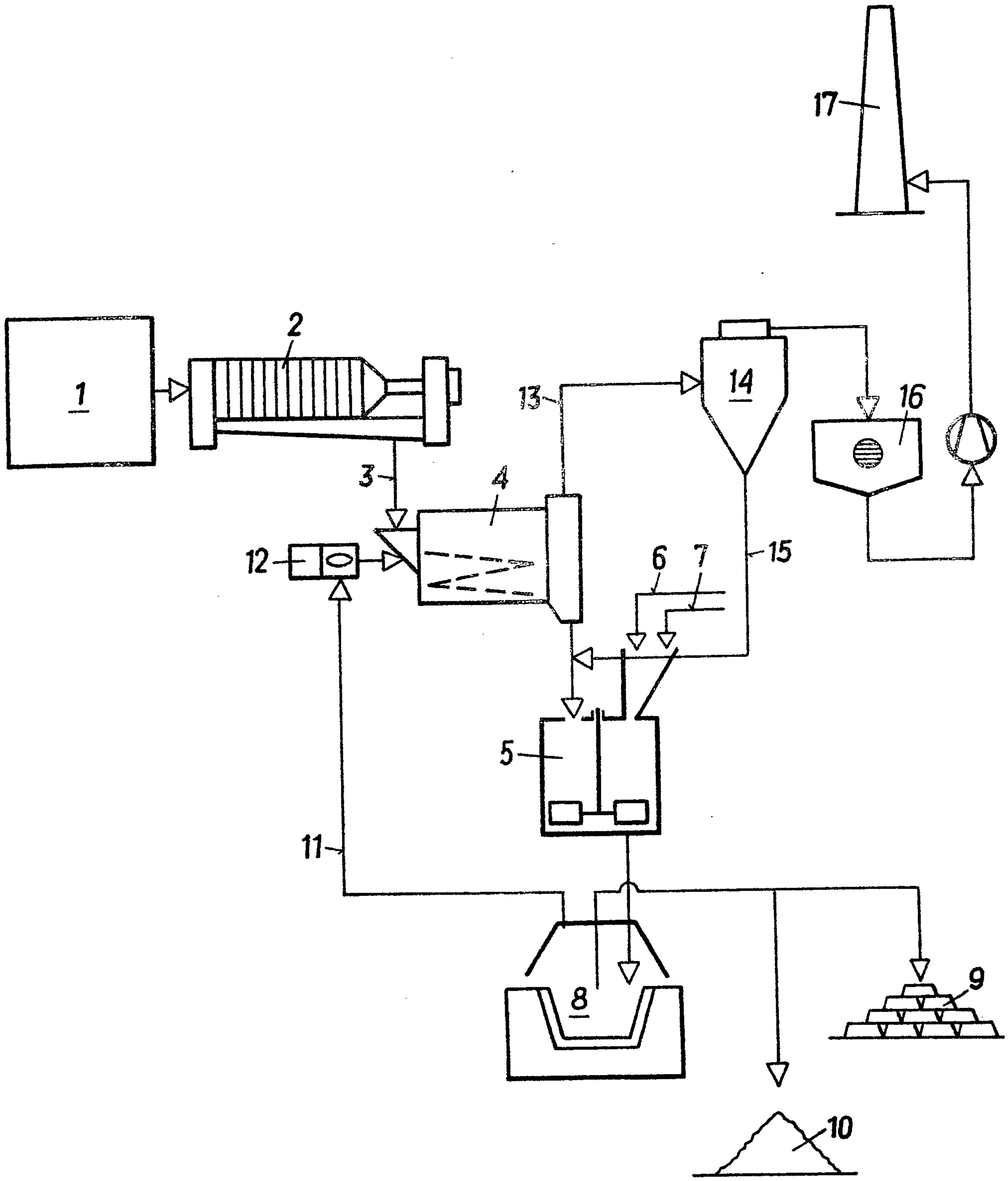
1
2
3
4
5
6
7
8
9
10
11
12
13
14
15
16
17